(19) Europäisches Patentamt / European Patent Office / Office européen des brevets

(11) **EP 4 137 770 A1**

(12) **EUROPEAN PATENT APPLICATION**

(43) Date of publication:
**22.02.2023 Bulletin 2023/08**

(21) Application number: **22188574.2**

(22) Date of filing: **03.08.2022**

(51) International Patent Classification (IPC):
$F27B\ 5/04$ (2006.01)     $F27B\ 5/16$ (2006.01)
$F27D\ 7/06$ (2006.01)     $F27D\ 99/00$ (2010.01)
$B22F\ 3/00$ (2006.01)

(52) Cooperative Patent Classification (CPC):
(C-Sets available)
**B22F 3/003; F27B 5/04; F27B 5/16; F27D 7/06; F27D 99/0073;** B22F 2998/00; B22F 2999/00; F27D 2099/0078     (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2021 US 202163228906 P**
**11.04.2022 US 202263329534 P**

(71) Applicant: **Desktop Metal, Inc.**
**Burlington, MA 01803 (US)**

(72) Inventor: **BARBATI, Alexander**
**Burlington, 01803 (US)**

(74) Representative: **Viering, Jentschura & Partner mbB**
**Patent- und Rechtsanwälte**
**Am Brauhaus 8**
**01099 Dresden (DE)**

(54) **RETORT FOR IMPROVED THERMAL PROCESSING OF SINTERABLE OBJECTS**

(57)    A retort for thermally processing sinterable objects including a retort body having an interior cavity configured to receive at least one part for sintering. The retort body includes a retort inlet, a fore volume, an inlet plenum, an outlet plenum and a retort outlet. The retort inlet is configured to be fluidly connected to a process gas inlet tube and receive a flow of process gas. The retort inlet is fluidly connected to the fore volume, the fore volume being configured to receive a cleansing object. The fore volume is fluidly connected to the inlet plenum, which is fluidly connected to the interior cavity, which is in turn fluidly connected to the outlet plenum. The outlet plenum is fluidly connected to the retort outlet which is configured to be fluidly connected to an effluent gas outlet tube via a Peclet sealing element.

FIG. 6

EP 4 137 770 A1

(52) Cooperative Patent Classification (CPC): (Cont.)

C-Sets
B22F 2998/00, B22F 10/14, B22F 10/18;
B22F 2999/00, B22F 3/1021, B22F 3/003,
B22F 2201/00

**Description**

FIELD OF THE DISCLOSURE

The subject matter of the present disclosure generally relates to retorts for sintering objects, and more particularly relates to retorts for improved thermal processing of sinterable objects.

BACKGROUND OF THE DISCLOSURE

Various powder metallurgy processes may be used to form metal objects such as parts. Such processes typically involve thermal processing (which may include debinding or sintering) a metal powder into a solid form.
Thermal processing hardware includes several elements to successfully process parts produced via powder metallurgy processes. Powder metallurgy processes may include legacy techniques such as press and sinter and metal injection molding, or more contemporary additive manufacturing techniques such as bound metal deposition, binder jetting, or any other technique where a part is shaped from a build material which includes a powdered or otherwise finely divided material (e.g., a metal like 17-4 stainless steel, 316 stainless steel, H13 tool steel, A2 tool steel, D2 tool steel, Ti6-4 titanium, commercially pure titanium, aluminum, 4140 carbon steel, ceramics, and the like) that is later exposed to a sufficiently high temperature and appropriate atmosphere to accomplish the consolidation and densification of the finely divided material to a solid form with a desired density, typically above 90%, but perhaps above 96% or 98% depending upon the material. As one skilled in the art will appreciate, descriptions are available in the literature prescribing the combination of temperature and chemical atmosphere that is required to consolidate a wide range of materials of commercial interest (see, for example "Sintering: Theory and Practice" by R. M. German).
During thermal processing of sinterable objects, objects to be processed are exposed to a wide range of chemical and thermal conditions. While some of these conditions may be desirable (e.g., inert gas and increased temperature), others may not (e.g., outgassed and leaked gaseous species such as water, oxygen, and hydrocarbons) and may lead to undesirable changes in the chemistry of the object or wholesale failure of the process. One skilled in the art will appreciate that species which may be beneficial in a first sintering process may be deleterious to a second sintering process; crucially, however, both cases demand that the operators and designers of thermal processes utilize thermal processing hardware and devices which are robust to the entry of unknown gaseous species into regions where parts are thermally processed.
It is common in such thermal processing processes to employ a retort which rests on the furnace floor and holds or contains the objects being processed. A main purpose of the retort is to provide a controlled chemical (e.g., gaseous) atmosphere during sintering. Existing such retorts are insufficient to protect objects undergoing thermal processes from the undesirable conditions identified above.

BRIEF SUMMARY OF THE DISCLOSURE

Described are approaches to design a retort, to be placed within a furnace, such that the objects to be thermally processed within the retort and furnace hotzone will be thermally processed in an atmosphere with improved control and consistency.
The present disclosure may be employed in a wide range of sintering environments and furnaces, including without limitation the manufacture of objects via traditional powder metallurgy techniques in addition to additive manufacturing technologies such as fused filament fabrication by extrusion or powder bed binder jet printing.

BRIEF DESCRIPTION OF THE DRAWINGS

Fig. 1 depicts a sintering cycle for sintering objects.

Fig. 2 depicts a prior art retort for sintering objects.

Fig. 3 depicts another prior art retort for sintering objects.

Fig. 4 depicts a theorized depiction of a lap seal for retorts in a closed position.

Fig. 5 depicts the theorized depiction of a lap seal for retorts of Fig. 4 in an open position.

Fig. 6 is a plan schematic view of an embodiment improved retort for sintering obj ects.

Fig. 7 depicts a detailed view of the retort outlet of Fig. 6.

Fig. 8 depicts graphite surfaces that may be used in formation of retorts.

Fig. 9 depicts theorized retort wall types.

Figs. 10A-B depict a perspective view and perspective cutaway view of an embodiment improved retort.

Fig. 11 depicts the base plate and fore volume of the retort of Fig. 10.

Fig. 12 is a plan schematic view of an alternate embodiment retort.

Fig. 13 is a plan schematic view of an alternate embodiment retort.

Fig. 14 is a plan schematic view of an alternate embodiment retort.

Fig. 15 is a plan schematic view of an alternate embodiment retort.

Fig. 16 is a plan schematic view of an alternate embodiment retort.

DETAILED DESCRIPTION

Described is a new and improved method and approach to retort design coupled with process parameters to improve conditions imposed upon objects during thermal processing. The concepts and techniques disclosed may be applied in many different configurations, and may improve the processing performance of many different styles and configurations of furnaces.

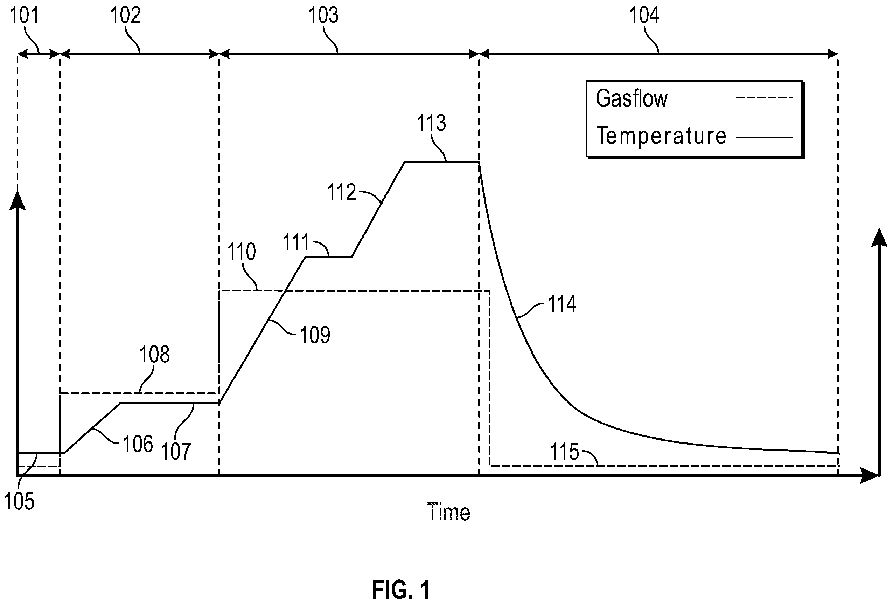

An example thermal processing profile is shown schematically in Fig. 1. The thermal cycle can include several segments, typically identified based upon the physical processes experienced by the objects undergoing thermal processing. In the thermal processing profile provided in Fig. 1 there are: (1) an initialization segment 101, (2) a debind segment 102, (3) a sinter segment 103, and (4) a cooling segment 104. While relative behaviors of temperature and flow have been assigned within each segment as a function of time, one skilled in the art will appreciate that these are for illustrative, instructional, and exemplary purposes only and a wide variety of variations in temperature, flow, and other environmental variables such as pressure or gaseous species comprising the flow may be specified and varied in ways which are not explicitly defined in the example figure. In segment 105, the initialization segment, the objects undergoing thermal processing will typically be held at a constant (or slowly varying) temperature for a period of time to establish a uniform state of flow and pressure within the thermal processing hardware. In segment 106, the temperature is increased to a debind temperature. In a segment 107, the objects are subjected to a temperature soak for debinding. In a segment 108, a flow of process gas is established during the debinding. In a segment 109, the temperature is further increased into the sintering segment 103. In a segment 110 during the sintering segment 103, the process gas flow rate is increased. In a segment 111 the objects are subjected to a temperature soak at an intermediate sintering temperature. In a segment 112 the temperature is then increased to a peak sintering temperature which is maintained in a temperature soak during a segment 113. In a segment 114 the temperature is cooled. In a segment 115 the gas flow rate is reduced during cooling 115.

The thermal processing hardware is essential to the performance of the object during and after thermal processing. Typically, the thermal processing hardware is identified as a furnace, but other terms such as "vacuum furnace", "tube furnace", "Metal injection molding (MIM) furnace" should be understood as thermal processing hardware; without loss of applicability, this disclosure will refer to the collective group of thermal processing hardware as "furnaces" collectively, and as a "furnace" in the singular.

Furnaces typically include the following elements: (a) a furnace housing, typically, but not always, constructed from a high temperature material such as a refractory ceramic or temperature resistant metal alloy, (b) high temperature insulation, (c) a means of heating objects to be thermally processed, (d) a volume, centrally located within the furnace housing, high temperature insulation, and in thermal communication with the means of heating, in which the objects to be thermally processed are housed during thermal processing. In certain furnaces, the objects accomplishing the means of heating may define a hotzone, such that the hotzone is everywhere between the heating elements. A further object, such as a retort, is typically also employed to house the objects during thermal processing and may provide improved control over the chemical environment to which objects are exposed, and may also improve the uniformity of heating and reduce thermal gradients in the object to be processed.

The orientation of each of these elements may vary slightly from furnace to furnace, but the general architecture is as follows: The objects to be processed are placed within the retort, the retort is disposed among heating elements, insulation is located outside of the heating elements opposite the retort, and a housing surrounds the insulation, in a manner to also at least surround the retort. The retort is typically designed, configured, and placed such that heating of the retort is intended to be uniform, in some cases, the retort may experience a warmer or colder temperature, with the expectation that the objects to be thermally processed will still experience a uniform thermal processing schedule (in terms of temperature and gas flow, for example).

The construction of most furnaces encourages the transport of contaminants to the objects undergoing thermal processing. The transport mechanism is typically a combination of gaseous diffusion and convection to the surface and then interior of the objects.

The sources of contamination may include:

(1) The furnace insulation,
(2) The furnace plumbing,
(3) Surfaces in the furnace other than the insulation,
(4) The objects to be sintered,
(5) The objects to be sintered, via the insulation and/or other surfaces, and
(6) The process gas.

The furnace insulation may contribute to the generation and transport of contamination. There are several mechanisms whereby the furnace insulation may adsorb contaminants that may later be released during the thermal processing of an object. In a first example, the furnace insulation may provide a venue for gaseous species to deposit when the furnace is open, vented to an uncontrolled or laboratory atmosphere, cold, or otherwise in an unheated state exposed to contaminants such as water vapor or oxygen. In a further example, the furnace insulation may provide a venue for gaseous debind species, such as hydrocarbons, soot, or other chemical derived from a binder chemistry of the object during thermal processing, to become absorbed and/or adsorbed. As one skilled in the art may appreciate, species which may become absorbed or adsorbed at a first temperature and pressure or first range of temperatures and pressures may later become evolved at a second temperature and pressure or second range of temperatures and pressures. In certain instances, and to aid in the removal of doubt, the second range of temperatures may be greater than the first range of temperatures, for example. Thus, the furnace insulation may act to capture and store contaminants and later foul the furnace upon release of the originally captured contaminants or other cognate contaminants derived from the originally captured contaminants. By way of non-limiting example, the furnace insulation may adsorb water vapor at a temperature between 20 and 40 degrees centigrade, as may occur when the furnace is cold and open for the loading of parts for thermal processing. As the thermal processing cycle is executed, heating elements will first heat the surface of the insulation nearest to the heating elements, and the temperature of the insulation will gradually rise from regions of the insulation proximal to the heating elements toward distal regions of the insulation. The propagation of temperature (caused by heat flow) through the insulation may evolve water vapor continuously as the furnace executes a thermal processing cycle. The presence of water vapor at elevated temperatures may lead to chemical and/or physical damage and/or degradation for objects undergoing thermal processing - for example, including the oxidation of metals. Further, as may be appreciated by one skilled in the art, furnace insulation typically exhibits a high surface area per volume of area occupied by the insulation, and may therefore act as a large reservoir or high-capacity storage venue for a wide variety of contaminants.

The furnace plumbing may also contribute to the generation and transport of contamination. Similar to the manner in which furnace insulation may absorb and adsorb contaminants, the furnace plumbing may adsorb some amount of contamination on the wetted surfaces of the plumbing. As one skilled in the art will appreciate, wetted surfaces both upstream and downstream of the objects undergoing thermal processing (where upstream and downstream are taken using reference from the direction of gas flow identified from the gas inlet and outlets) may constitute regions where contamination may deposit onto and evolve from.

The objects to be sintered may also serve as sources of contamination. The objects to be sintered may consist, at certain periods of time during thermal processing, a mixture of substances such as polymers, metal powders, metal oxides of the metal powders, metal oxides dissimilar from the metal powders, ceramic powders, and any other materials necessary to accomplish the thermal processing of the object, as will be appreciated by one skilled in the art. Depending upon the temperature and stage of thermal processing, a first material in the object to be processed, such as a metal powder, may become contaminated from a second material in the object to be processed, such as a polymeric binder.

Other surfaces in the furnace may serve as sources of contamination. These surfaces may include any boundaries of the furnace, portions of the furnace frame, measurement equipment (such as pressure, temperature, or flow sensors), electrical feedthroughs, electrical insulation, electrical wiring, mechanical fasteners, or any other apparatus that is in gaseous communication (via convection or diffusion, for example) with the heated region in the furnace where the objects to be thermally processed will be housed.

The process gas may be a source of contamination. Depending upon the material comprising the object to undergo thermal processing, impurities within the process gas may damage the chemical and/or physical performance of the object after thermal processing. For example, carbon steels and tool steels (such as the midcarbon steels 4140 and 4340, and the tool steels H13, A2, D2, and S7, and the reactive metals such as aluminum, titanium, and alloys thereof, for example) are sensitive to the amount of water vapor at several temperatures throughout thermal processing. At relatively low temperatures (below approximately 600 degrees centigrade), the water may interact with the various metals to produce a metal oxide, as the temperature increases in the furnace, the oxide may devolve into the metal and a gaseous species containing oxygen. In some cases, carbon containing gases such as carbon monoxide or carbon dioxide may be evolved (or may otherwise form as a result of a reaction, as is the case of water and/or oxygen with carbon, such as graphite, for example), where the source of carbon may be from the chemistry of the metal alloy which may serve to deplete the chemical concentration of carbon below the acceptable level of carbon required to satisfy the chemistry of a given alloy; thus, water contamination in the process gas may lead to decarburization of the metal from which the objects in the furnace are comprised. Other gaseous compounds such as carbon monoxide, carbon dioxide, oxygen, nitrogen, methane, or other species may serve as contaminants depending upon the alloy to be processed. By way of non-limiting example, the presence of methane when processing a steel may result in carbon uptake (carburization) affecting the chemistry of the steel to the point where the content of carbon is no longer acceptable, either throughout the entirety of the object or in specific regions of the object (as would be performed in a case hardening operation).

It is thus strongly desired to control and mitigate any sources of contamination from the sources identified ((1) to (6)). Control and mediation is a crucial aspect of furnace design.

Now with reference to Fig. 1, thermal cycles typically consist of several stages including: (1) an initialization segment, (2) a debind segment, (3) a sintering segment, and (4) a cooling segment. In each segment, the furnace pressure, process gas flow, process gas species, temperature, and other relevant variables may be programmed, varied, or otherwise commanded to aid the objects to be processed in each stage.

For example, during the debind segment, the process gas may contain a relatively high concentration of hydrogen, to hydrogenate the binder chemistry to be degraded, or, in an alternative embodiment, may include dry air to oxidize and degrade the binder chemistry. Furthermore, the temperature in the debind segment may increase at a first rate to a first hold temperature for a first hold time, and then increase at a second rate to a second hold time, or exhibit any number of changes in temperature (up or down) to any number of hold temperatures for any given duration of time, the rates of temperature change, hold temperatures, and hold durations required to remove the binder or otherwise cleanse the objects and prepare them for further processing steps.

During sintering, the process gas may contain a high concentration of hydrogen, or may contain a high concentration of inert gas (such as argon), or may contain a high concentration of nitrogen, or any other gas required to thermally process the objects to be processed. As will be understood by one skilled in the art, the determination of a 'high' or 'low' concentration is made in reference to the sum total of gaseous species within the furnace, and, thus, discussions and specifications of relative concentration should not be confused with measurements of the total gas content, as may be indicated, at least in part, by the pressure in the furnace. In some embodiments, mixtures of gases may be required during the sinter segment. The pressure of the furnace during sintering may be larger than atmospheric (e.g., >760 Torr), atmospheric (e.g., approximately 760 Torr), moderately lower than atmospheric (e.g., in the range from and including 300 to slightly less than 760 Torr), or substantially lower than atmospheric (e.g., any pressure lower than 300 Torr including pressures less than 0.01 Torr). In some embodiments, pressures may be considered as low vacuum (25 Torr to atmospheric pressure), medium vacuum (25 Torr to 1e-3 Torr), high vacuum (1e-3 to 1e-9 Torr), ultrahigh vacuum (1e-9 to 1e-12 Torr), or other terms denoting the vacancy of matter in a volume. Applicant appreciates that several sets of terminology may exist to describe the range of pressure or ranges of pressures utilized during thermal processing, but note that the specific terms utilized are significant only to the extent they indicate the dominant physical processes which prevail in affecting the thermal processing of sinterable objects. The flowrate may be any flow rate of gaseous species used as a process gas.

During cooling, the temperature may be controlled to decrease at a set rate, and in certain embodiments may be configured to hold at a specific temperature for a specific period of time for reasons including heat treatment of the object to be processed. In some embodiments, the gaseous species to which the objects to be thermally processed may be reducing, oxidizing, carburizing, decarburizing, or inert. The flow rate of process gas into the furnace may be commanded to any required flow rate. In certain embodiments, the gas flow may be larger than or equivalent to the largest flow rate of process gas utilized during the sinter segment. In certain embodiments, the gas flow may be much smaller than the flow rate of process gas used during the sinter segment. In certain embodiments, there may be no gas flow during the cooling segment. The pressure may be controlled to a specific value of pressure, either above or below atmospheric pressure. In certain embodiments, the flow of process gas may act in concert with command of a pumping system to achieve and control the desired furnace pressure.

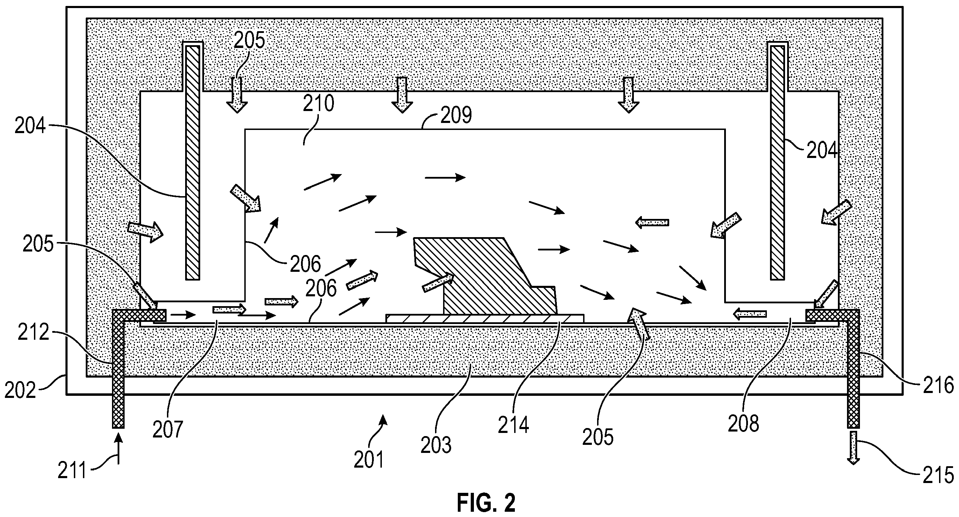

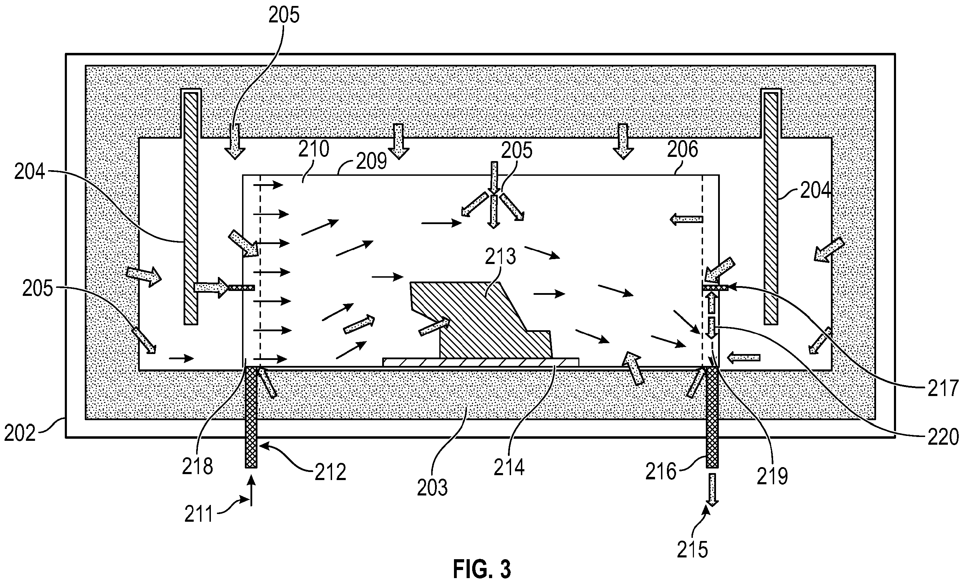

Several state-of-the-art retorts are shown in Figs. 2 and 3. These figures show the orientation of the retort in relation to the heating elements, insulation, and the containment volume.

With reference to Fig. 2, a furnace 201 includes a containment volume 202 in which there is insulation 203 and heating elements 204. When heated contaminants 205 may outgas from the insulation 203, be transported through the gaseous atmosphere or permeate through the retort 206 from an annulus 209 of the furnace (i.e., the open area outside of the retort. The retort 206 includes a retort inlet 207, retort outlet 208 and an interior cavity 210. When desired during processing, a flow of process gas 211 is input through a process gas inlet 212 where it flows through the retort 206 and over the object 213 being sintered while it rests on an object support 214. The process gas, in some embodiments modified by interaction with the retort and/or objects to be sintered, then flows as effluent gas 215 out of an effluent gas outlet 216. The material from which the retort is composed may provide some degree of sealing to isolate the atmosphere within the retort from the atmosphere in the annulus 209. Contaminants generated outside of the retort may enter the retort through the retort inlet (either through the process gas inlet, or via a sealing interface at the retort inlet, or both), the retort outlet (either through the effluent gas outlet, or via a sealing interface at the retort outlet, or both), may tunnel through the wall, or may be generated within the interior cavity of the retort from the objects to be thermally processed or any other object present within the retort.

Fig. 3 depicts another state-of-the art furnace and retort configuration sharing many of the same characteristics and elements as the furnace and retort configuration of Fig. 2. However, the retort 206 includes a parting interface 217, through which there may be a rate of permeation of contaminants. A retort inlet plenum 218 receives the flow of process gas 211 which then interacts along with contaminants with the object 213. Used process gas and contaminants flow out a retort outlet plenum 219, however there will be a back streaming of contaminants 220.

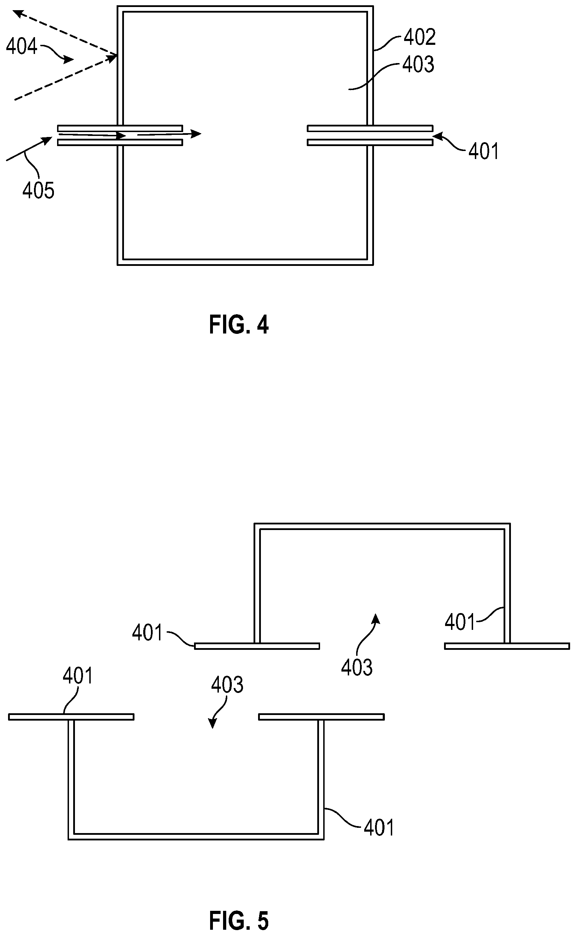

Figs. 4-5 depict a parting interface 401 that is a feature of any retort 402 which is designed to exist in at least two configurations: a first configuration (Fig. 4) where the retort 402 may be considered closed and objects to be thermally processed may not be removed from an interior cavity 403 of the retort or easily configured from a user or device outside of the retort, and a second configuration (Fig. 5) where the retort 402 may be considered open and objects to be thermally processed may be removed from the interior cavity 403 of the retort 402 and the objects may further be reconfigured within the retort 402. The parting interface 401 consists, of the exposed surfaces generated when the retort is changed from the first configuration to the second configuration. In certain embodiments, the parting interface may be formed from the combination of a door and a door jamb. In certain embodiments, the parting interface may be formed from a set of stacked rings. In certain embodiments, the parting interface may be formed from a gasket as set between two opposing surfaces. In certain embodiments, the gasket may be formed from a carbonaceous material such as graphite, commercially available as a graphite foil. During processing certain contaminants 404 from outside the retort 402 will fail to penetrate to the interior cavity 403 of the retort 402. However certain contaminants 405 may achieve a trajectory proceeding into interior cavity via the parting interface 401.

Now described are concepts for improved retorts, including:

1. A sealing apparatus (the Peclet seal) on the outlet of the retort;
2. A fore volume in the retort, with controlled gas entrances and exits, to optionally clean the incoming process gas before the process gas may interact with the objects to be thermally processed;
3. Constructing the retort from low-permeability material with a limited number of inlets and outlets;
4. A Peclet seal, which may in certain embodiments be removable, such that different sealing purities may be obtained;
5. Installation of the sealing surfaces within regions experiencing temperature profiles identical to the objects to be thermally processed (i.e., everything that needs to be clean stays hot); and
6. An improved seal between the inlet gas tube and the retort, where, optionally, this seal may be a high temperature seal and located within regions experiencing temperature profiles identical to the objects to be thermally processed.

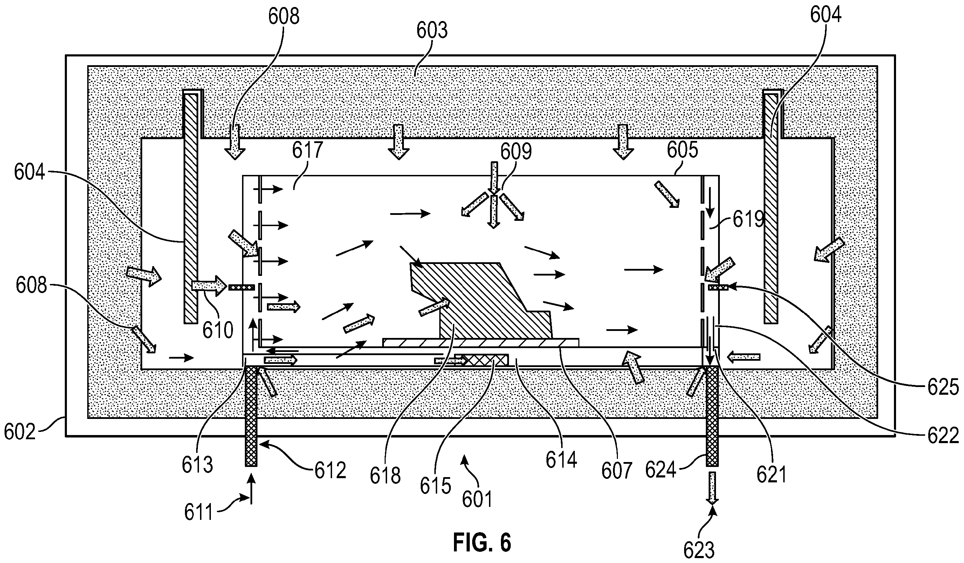

An embodiment improved retort is detailed in Fig. 6. In certain embodiments, the furnace structure may be similar or the same to those shown in Fig. 2-3. Particularly, a furnace 601 includes a containment volume 602 encompassing thermal insulation 603 and heating elements 604. Within a retort 605 there is an object 606 to be thermally processed, which may rest on an object support 607. As with the configurations of Figs. 2-3, contaminants 608 may be generated from insulation and transported through the gaseous atmosphere. As shown in theory at point 609 there may be some rate of permeation of contaminants through the retort and retort features and thereafter transport of the contaminants within retort volume. As shown in theory at point 610, permeation of contaminants may occur at a rate through the parting interface(s) of the retort. According to some embodiments, and as shown in theory at point 610, the contaminant permeating through the retort may be a first contaminant and may react to a second contaminant upon interaction with the retort during the permeation process; this second contaminant may then transport through the retort volume. As one skilled in the art may appreciate, in certain embodiments a combination of first and second contaminants may exist in the retort volume depending upon the kinetics and thermodynamics of reaction during the permeation process. During a thermal processing cycle, a flow of process gas 611 enters the retort 605 through a process gas inlet tube 612 and into a retort inlet 613 configured to receive it. The flow of process gas 611 then passes to a fore volume 614, passing over a cleansing object 615. The cleansing object is configured to absorb contaminants that may be present in the flow of process gas 611 or that have entered the retort 605 through the retort inlet 613. The flow of process gas 611 then flows from the fore volume 614 through an inlet plenum 616 and into an internal cavity 617 of the retort 605. There, any contaminants 618 that may have managed to enter the internal cavity 617 interact with the object 606. Process gas 619 also interacts with the object 606. The flow of process gas 611 then enters an outlet plenum 620 where it passes to a retort outlet 621. A Peclet sealing element 622 prevents backflow of contaminants into the retort 605 via the retort outlet and Peclet sealing element. Effluent gas flow 623 passes out effluent gas outlet tube 624. Parting interfaces 625 allow the retort 605 to be opened and may in certain embodiments be between successively stacked shelves.

As used within the present disclosure, Peclet sealing refers to tubing long in length relative to a lengthscale of the tube cross-section (such as, in some embodiments, a tube diameter, a tube radius, a square root of a cross-sectional area, or a value in proportion to a square root of a cross-sectional area, for example) combined with an outflow through the tubing of a process gas that prevents backflow or diffusion of contaminants and ambient air through the tubing. The performance of a Peclet sealing element may be evaluated in terms of the unitless Peclet number, which corresponds to the product of gas velocity and channel length divided by a diffusivity of a gaseous species transiting the tube and the flow of which is intended to be affected by the Peclet sealing element. The Peclet number may correspond to:

$$Pe = u \times \frac{L}{D}$$

, where Pe represents Peclet number, u represents average velocity of sweep gas within a tube or channel, L represents the length of the tube, and D represents the diffusivity of the species in question (e.g., a source of contamination). Increased Peclet number may be associated with increased sealing. Thus, as velocity or tube length increases, gas flow may more effectively impede diffusion of outside air, which may include contamination. Accordingly, for a given gas flow velocity, the Peclet number can be increased by using a thinner or longer channel.

In certain embodiments, it is desirable to maintain a flow of gas in the Peclet tube such that the flow maintained prevents or substantially reduces a counterflow of contaminant gas species. In certain embodiments, a downstream portion of a tube may be exposed to a contaminant such as a hydrocarbon, oxygen, or water vapor and the upstream portion of the tube may connect, terminate, or otherwise be connected to a volume for thermally processing and object such as a sinterable material. Since, in certain embodiments, it is desirable to maintain a contaminant free atmosphere (or at least substantially contaminant reduced atmosphere as compared to the atmosphere in the downstream region of the tube), a flow may be maintained in the Peclet tube directed from the region where the contaminants are desired to be free toward the region where the contaminants are present. The degree to which transport of contaminants is sealed or arrested in the Peclet tube is determined by the Peclet number.

Applicant estimates that for an upstream contaminant level of c0 and a downstream contaminant level c1 (where c1>c0 and the contaminant levels may be understood as an intensive measure of concentration such as parts per million, mass per volume, moles per volume, or similar), and where the upstream contaminant level is determined entirely by back transport of the downstream contaminant, that the upstream contamination may be estimated using the expression c0 = c1*exp(-Pe), where exp() is the exponential function. Thus, specification of a Peclet number in the tube will determine the ratio of c0/c1: for Pe>12 parts per million contaminant reduction may be achieved, for Pe> 20 parts per billion contaminant reduction may be achieved. Applicant typically operates with a Peclet number of (or in excess of) 25. In certain embodiments, the Peclet number may range from 10 to 25, or from 25 to 100, or even from 1 to 10, depending upon the level of sealing required in the Peclet tube. Once a level of sealing and therefore Peclet number have been determined, and in the case where the diameter has been specified, an estimation or determination of the diffusivity for the contaminant species may be found or computed.

Common resources for determination of the diffusivity of molecules in gaseous transport may be made using the text "The Properties of Gases and Liquids" by Poling, Prausnitz, and O'Connell, using tabulated data, theoretical predictions, or any other suitable means. The Peclet number, diffusivity, and tube cross-sectional lengthscale determined, the velocity may then be computed, and a flow rate of a process gas determined by the product of the gas velocity and the tube cross-sectional area. As one skilled in the art will appreciate, the diffusivity of a species in a gas may be strongly temperature dependent, and thus the flow rate required for sufficient sealing may depend upon the temperature in the furnace during thermal processing. For a tube of 10mm inner diameter, 65mm length, a Peclet number of 25, and a contaminant molecule modeled as oxygen (or other small gas), inventors use flows to accomplish sealing above 1 standard liters per minute at 1325 degrees C, above 0.8 standard liters per minute at 600 degrees C, and above 0.6 standard liters per minute at 200 degrees C, for example. As one skilled in the art will appreciate, this procedure may be modified to determine a geometry of the Peclet seal for a fixed flowrate, known diffusivity, and defined value of Pe to achieve a specified reduction in contamination on the upstream end of the Peclet tube. Inventors recognize that furnaces of different construction (either in overall architecture or choice of materials), or objects to be thermally processed containing different materials may require atmospheres with varying amounts of cleanliness or contaminant reduction. In certain embodiments, a larger or smaller Peclet number may be required to achieve target process performance, which may be accomplished easily through variation of the rate of flow of process gas.

In certain embodiments there may be portions of the retort that reside outside of a hot zone of the furnace without departing from the present disclosure. It is desirable, however, for the Peclet seal to be in the hotzone or otherwise heated to the temperatures of the objects being processed. In certain embodiments, there may be portions of the retort that reside outside of a hot zone of a furnace, and the retort may be further configured such that objects to be thermally processed are situated in the retort and within the hotzone, such that the objects to be thermally processed are within the retort and hotzone.

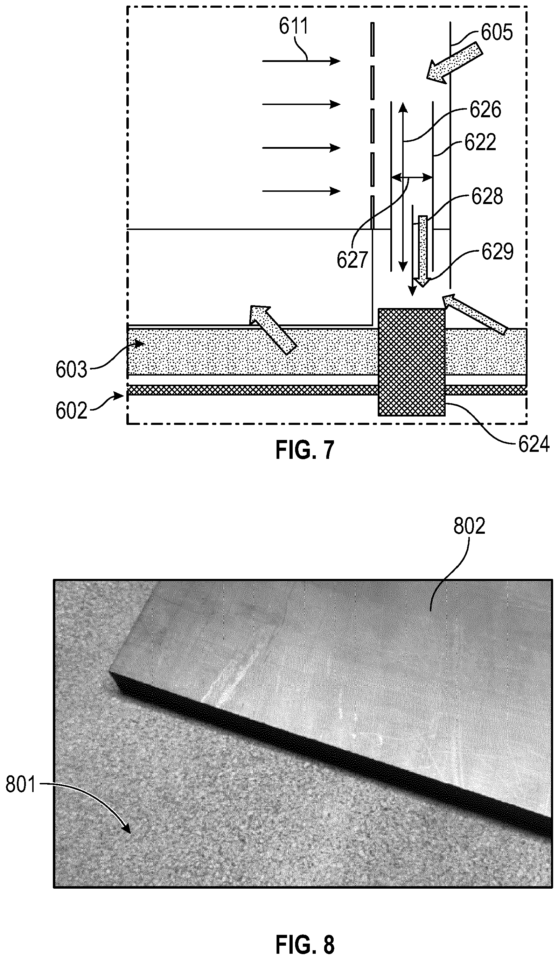

Fig. 7 depicts the retort outlet 621 and Peclet sealing element 622 in additional detail. The Peclet sealing element 622 has a length 626 as a dimension along, or in some embodiments substantially along, the direction of flow. The Peclet sealing element 622 has a diameter 627 as a dimension traverse, or in some embodiments substantially traverse, to the direction of flow. Process gas 628 from the interior cavity is transferred along with unidirectional transport of gaseous contaminants 629.

With reference to Fig. 8, a low-grade extruded graphite 801 is compared to a high-grade isotropic graphite 802 type G348 from Tokai Carbon USA of Hillsboro, Oregon. As one skilled in the art will appreciate, materials which exhibit a low density may also exhibit a high degree of permeability, relative to a chemically similar material with a higher density. In the case of the graphite materials shown in Fig. 8, the low-grade extruded graphite may have a density of approximately 1.74 g/cc, whereas the high-grade G348 graphite may have a density of approximately 1.92 g/cc, resulting in a porosity of approximately 8%, and a characteristic pore size of 1 micron. Further, according to material published by Tokai Carbon USA of Hillsboro, Oregon, the G348 grade may have a permeability to gas of 0.05 cm^2/s, whereas a lower density extruded grade does not have a specified permeability. Reference to Fig. 8 shows the difference in surface appearance between the high and low density grades: The high density grade appears as a monolithic slab with no apparent pores, holes, or passages visible to the eye - in contrast, the low density grade appears to be comprised of bonded graphite grains with open space therebetween.

In certain embodiments the retort material may be formed from a ceramic such as alumina, zirconia (with or without a stabilizer such as yttria or magnesia), magnesia, yttria, or other ceramic material. In certain embodiments, the retort material may be formed by a silicon carbide, reaction bonded silicon carbide, silicon nitride, reaction bonded silicon nitride, or other silicon containing refractory material. In certain embodiments the retort material may be formed from a glass or glass-like material such as silica, fused silica, fused quartz, borosilicate glass (such as Borofloat by Schott AG of Mainz, Germany or Pyrex by Corning of Corning, NY). In certain embodiments, the retort may be formed by a silicate-containing material such as porcelain, cordierite, steatite, forsterite, or mullite. In certain embodiments, the retort may be formed by silicon.

In certain embodiments, the retort may be formed from a metallic alloy such as stainless steel (such as 310S, 316, 316L, and 304, for example), a nickel-based superalloy such as Inconel (such as type 625, or 718, for example), high nickel content alloys (e.g., those above about 20% by weight such as HK40, HP, H101, 30Cr Micro, 45Pa, 45HT, and 60HT, for example). In certain embodiments, inventors recognize that the use of a particular metallic alloy may be preferred based upon the ease of fabrication, ductility, and/or resistance to thermal shock. In certain embodiments, the metallic alloy may be formed, constructed, or shaped into a tubular or cylindrical structure. In certain embodiments, the metallic alloy may be formed, constructed, or shaped into a cuboid.

In certain embodiments, the retort may be formed from a refractory metal such as molybdenum, niobium, tantalum, tungsten, or rhenium. In certain embodiments, a variety, or combination, of retort materials may be utilized.

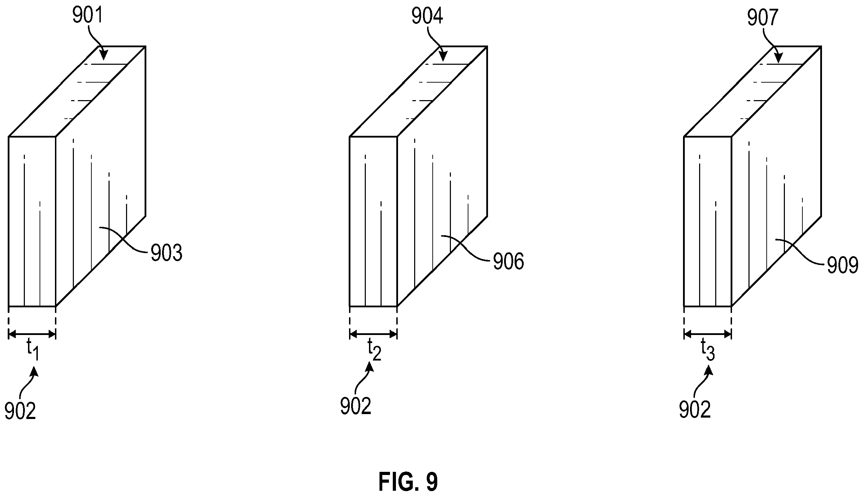

With reference to Fig. 9, a first retort wall 901 comprised of a first material has a first thickness 902 and a first area 903 selected to provide a hermetic seal between an area outside of a retort an internal cavity. A second retort wall 904 comprised of a second material has a second thickness 905 for a second area 906 selected to provide a semi-seal between an area outside of a retort and an internal cavity. A third retort wall 907 comprised of a third material has a third thickness 908 for a second area 909 selected to provide a porous seal between an area outside of a retort and an internal cavity. In each case, the degree of sealing (hermetic sealing, semi-sealing, or porous sealing) provided by the wall will depend upon the pressure and concentration differences between the sealed and unsealed sides of the wall, the thickness of material separating the sealed and unsealed sides of the wall, and the total area utilized to provide sealing over the sealed and unsealed sides of the wall. Without being bound by theory, the total flux of species may related to an expression of the form (Area)/(Thickness)*(Pressure and/or concentration difference)*(Intrinsic retort wall property), where the intrinsic retort wall property may be, or may be proportional to, a permeability. In some embodiments, the appropriate permeability utilized for the purposes of engineering estimation and design may be determined under conditions of laminar (or continuum) gas flow. In some embodiments, the appropriate permeability utilized for the purposes of engineering estimation and design may be determined under conditions of molecular (or rarefied) gas flow. In some embodiments, the appropriate permeability utilized for the purposes of engineering estimation and design may be determined under conditions of transition (or intermediate) gas flow. The various gas flow regimes are well described in the literature, for example in the references "Vacuum Technology" by Alexander Roth and "Scientific Foundations of Vacuum Technique" By Saul Dushman.

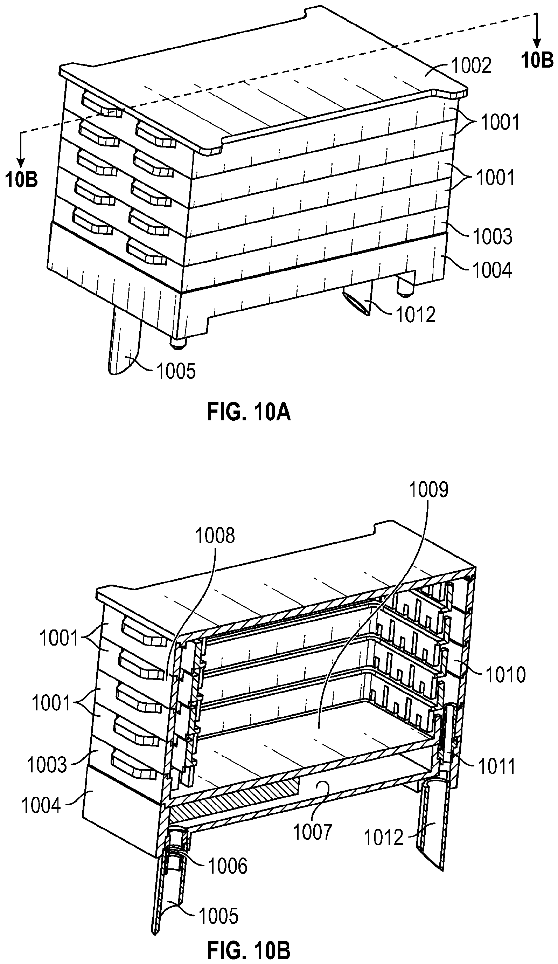

Fig. 10A depicts an embodiment retort configuration. Fig. 10B depicts a cutaway view of the embodiment retort configuration of Fig. 10A. The retort configuration includes a plurality of shelves 1001 an uppermost one of which is engaged with a lid 1002 and a bottommost 1003 one is engaged with a base plate 1004. During a thermal processing cycle process gas flows from process gas inlet tube 1005 where it is received by a retort inlet tube interface assembly 1006. The process gas flows through the fore volume 1007 and into the inlet plenum 1008, which in the embodiment is comprised of multiple sections of the shelves 1001. The process gas thereafter flows into an interior cavity 1009 of the retort configuration, which again is comprised of multiple sections of the shelves 1001. The process gas flow then exits the internal cavity 1009 and enters an effluent plenum 1010. The process gas flow along with gaseous contaminants flow through the Peclet sealing element 1011 to an effluent gas outlet tube 1012 which may provide a vacuuming force.

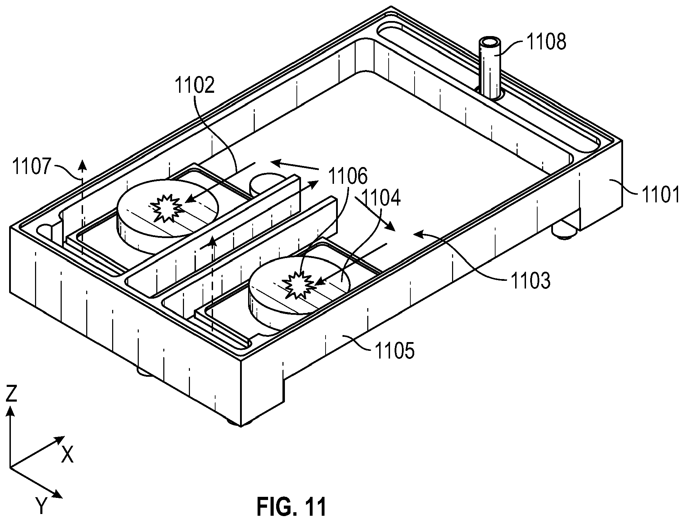

Fig. 11 depicts an embodiment base plate 1101 incorporating disclosed concepts. A flow of gaseous species 1102 (process gas and contaminants at a first concentration) in the X-Y plane flows into a fore volume 1103 and over a cleansing object 1104 resting on a cleansing object support 1105. An interaction 1106 occurs between the cleansing object and gaseous species depleting contaminants from the flow of gaseous species. A flow of gaseous species 1107 (process gas and contaminants at a depleted concentration compared to the first concentration) exits the fore volume in the z-direction and into the inlet plenum of a retort. Used process gas and gaseous contaminants exit the retort through the Peclet sealing element 1108.

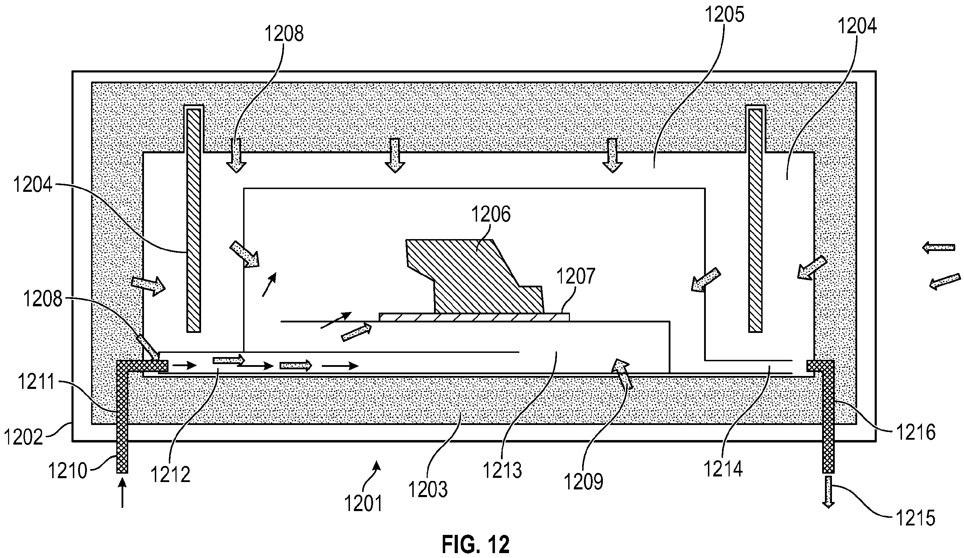

Fig. 12 depicts an alternative embodiment. Particularly, a furnace 1201 includes a containment volume 1202 encompassing thermal insulation 1203 and heating elements 1204. Within a retort 1205 there is an object 1206 to be thermally processed, which may rest on an object support 1207. Contaminants 1208 may be generated from insulation and transported through the gaseous atmosphere. As shown in theory at point 1209 there will may be some rate of permeation of contaminants through the retort and retort features and thereafter transport of the contaminants within retort volume. During a thermal processing cycle, a flow of process gas 1210 enters the retort 1205 through a process gas inlet tube 1211 and into a retort inlet 1212 configured to receive it. The flow of process gas 1210 exits the retort 1205 through a Peclet sealing element 1214 which prevents backflow of contaminants outgassed from the retort 1205. The effluent gas 1215 flow passes out Peclet sealing element 1214 into effluent gas outlet tube 1216.

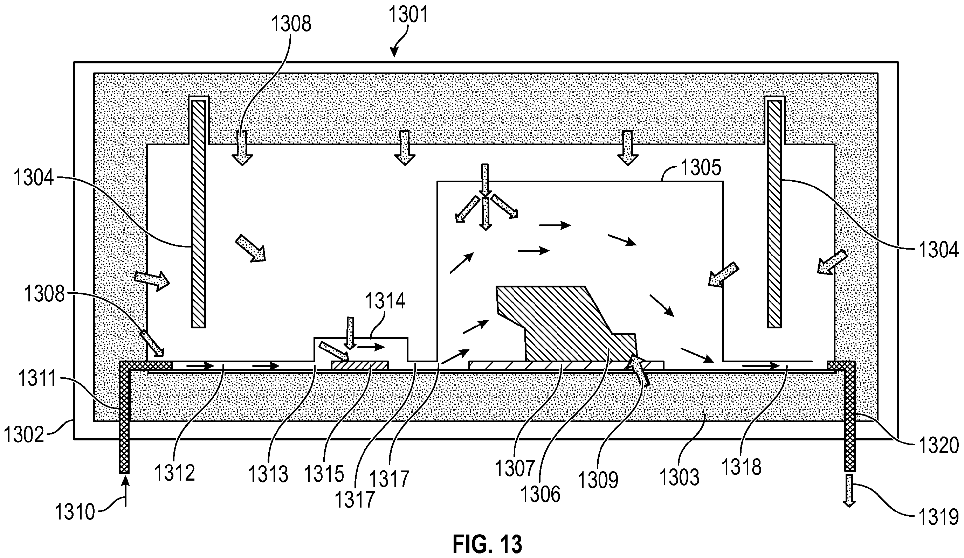

Fig. 13 depicts an alternative embodiment having an adjacent fore volume. Particularly, a furnace 1301 includes a containment volume 1302 encompassing thermal insulation 1303 and heating elements 1304. Within a retort 1305 there is an object 1306 to be thermally processed, which may rest on an object support 1307. Contaminants 1308 may be generated from insulation and transported through the gaseous atmosphere. As shown in theory at point 1309 there will may be some rate of permeation of contaminants through the retort and retort features and thereafter transport of the contaminants within retort volume. During a thermal processing cycle, a flow of process gas 1310 enters the retort 1305 through a process gas inlet tube 1311 and into a fore volume inlet 1312 configured to receive it. The flow of process gas 1310 flows through a fore volume 1313 inside a fore volume housing 1314 and over a cleansing object 1315. The flow of process gas 1310 then flows through a fore volume - retort gaseous connection 1316 and into the retort 1305 via a retort inlet 1317. After flowing over the object 1306 the process gas exits the retort 1305 through a Peclet sealing element 1318 which prevents backflow of contaminants outgassed from the retort 1305. The effluent gas 1319 flow passes out Peclet sealing element 1318 into effluent gas outlet tube 1320.

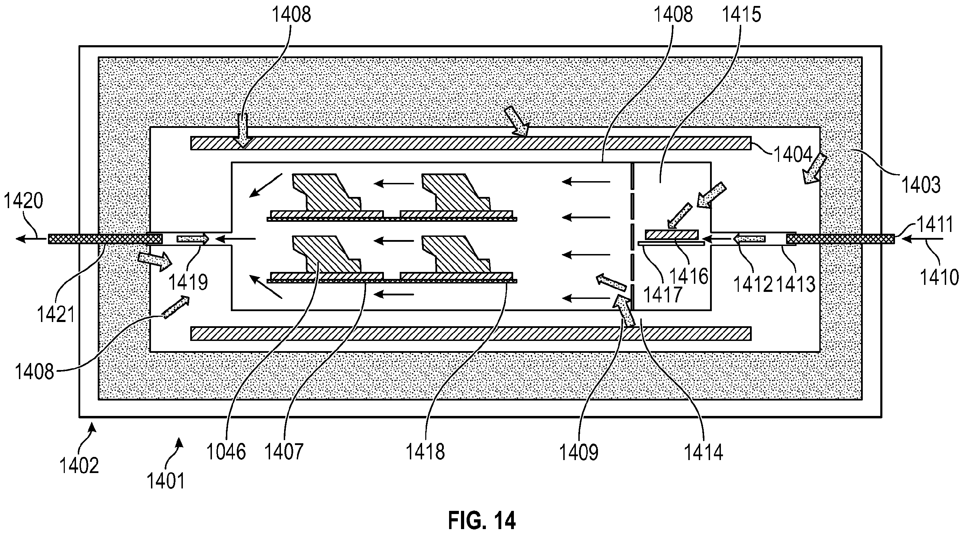

Fig. 14 depicts an alternative embodiment having centrally located retort. Particularly, a furnace 1401 includes a containment volume 1402 encompassing thermal insulation 1403 and heating elements 1404.

Within a retort 1405 there are objects 1406 to be thermally processed, which may rest on an object support 1407. Contaminants 1408 may be generated from insulation and transported through the gaseous atmosphere. As shown in theory at point 1409 there will may be some rate of permeation of contaminants through the retort and retort features and thereafter transport of the contaminants within retort volume. During a thermal processing cycle, a flow of process gas 1410 enters the retort 1405 through a process gas inlet tube 1411 and into a fore volume inlet 1412 configured to receive it. The flow of process gas 1410 flows through a process gas inlet - fore volume gaseous connection 1413 and into a fore volume 1414 having a for volume cavity 1415. The flow of process gas 1410 flows over a cleansing object 1416 resting on a shelf 1417. The flow of process gas then flows over objects 1406 resting on shelves 1418. After flowing over the objects 1406 the flow of process gas 1410 exits the retort 1405 through a Peclet sealing element 1419 which prevents backflow of contaminants outgassed from the retort 1405. The effluent gas 1420 flow passes out Peclet sealing element 1419 into effluent gas outlet tube 1421.

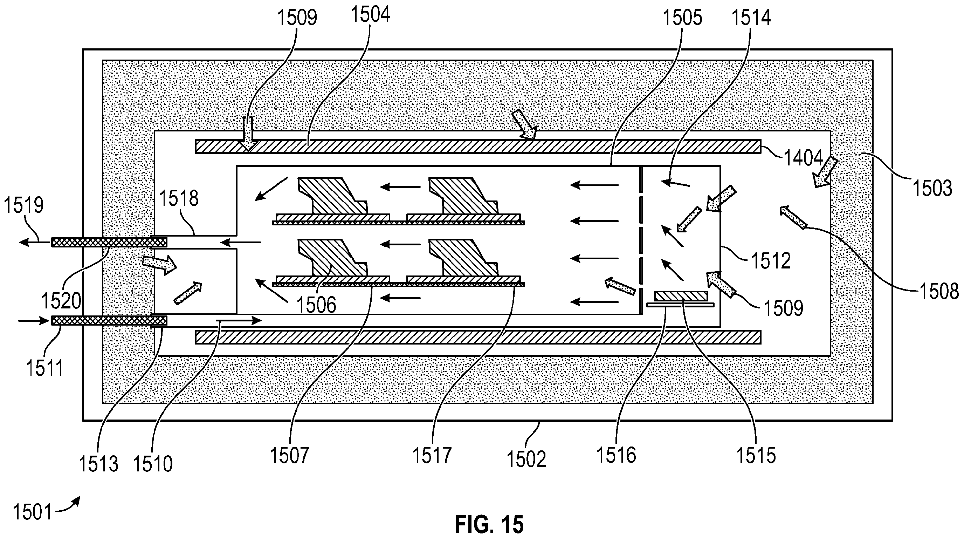

Fig. 15 depicts an alternative embodiment having centrally located retort. Particularly, a furnace 1501 includes a containment volume 1502 encompassing thermal insulation 1503 and heating elements 1504. Within a retort 1505 there are objects 1506 to be thermally processed, which may rest on an object support 1507. Contaminants 1508 may be generated from insulation and transported through the gaseous atmosphere. As shown in theory at point 1509 there will may be some rate of permeation of contaminants through the retort and retort features and thereafter transport of the contaminants within retort volume. During a thermal processing cycle, a flow of process gas 1510 flows through a process gas inlet tube 1511 and into a fore volume inlet 1512 via a process gas inlet fore volume gaseous connection 1513. The flow of process gas 1510 flows into a fore volume cavity 1514. The flow of process gas 1510 flows over a cleansing object 1515 resting on a shelf 1516. The flow of process gas then flows over objects 1506 resting on shelves 1517. After flowing over the objects 1506 the flow of process gas 1510 exits the retort 1505 through a Peclet sealing element 1518 which prevents backflow of contaminants outgassed from the retort 1505. The effluent gas 1519 flow passes out Peclet sealing element 1518 into effluent gas outlet tube 1520.

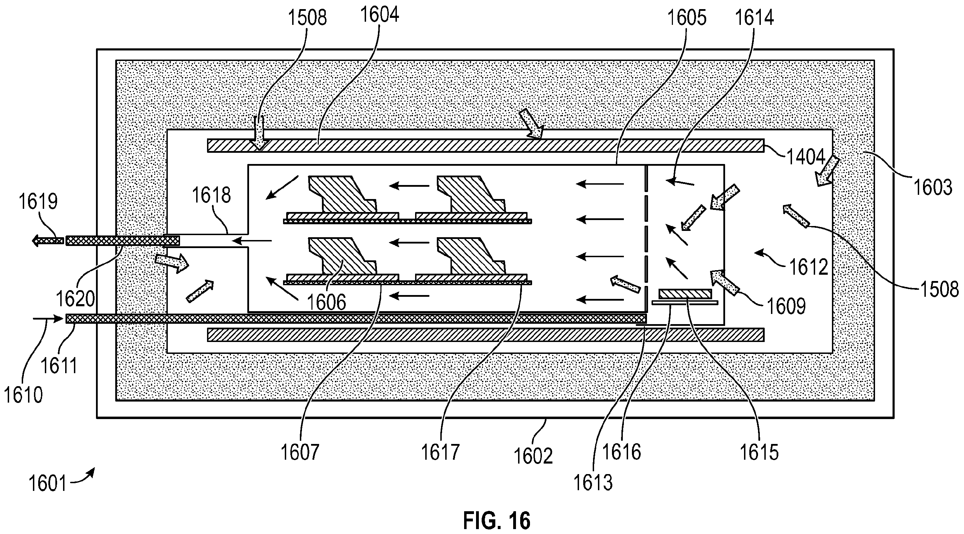

Fig. 16 depicts an alternative embodiment having centrally located retort. Particularly, a furnace 1601 includes a containment volume 1602 encompassing thermal insulation 1603 and heating elements 1604. Within a retort 1605 there are objects 1606 to be thermally processed, which may rest on an object support 1607. Contaminants 1608 may be generated from insulation and transported through the gaseous atmosphere. As shown in theory at point 1609 there will may be some rate of permeation of contaminants through the retort and retort features and thereafter transport of the contaminants within retort volume. During a thermal processing cycle, a flow of process gas 1610 flows through a process gas inlet tube 1611 and into a fore volume 1612 via a process gas inlet fore volume gaseous connection 1613. The flow of process gas 1610 flows into a fore volume cavity 1614. The flow of process gas 1610 flows over a cleansing object 1615 resting on a shelf 1616. The flow of process gas then flows over objects 1606 resting on shelves 1617. After flowing over the objects 1606 the flow of process gas 1610 exits the retort 1605 through a Peclet sealing element 1618 which prevents backflow of contaminants outgassed from the retort 1605. The effluent gas 1619 flow passes out Peclet sealing element 1618 into effluent gas outlet tube 1620. The tube inlet to the retort may be a refractory metal, ceramic, of similar material to the retort or dissimilar (provided there is no deleterious interaction between materials, such as melting).

In certain embodiments, the base plate including a fore volume may be positioned on the top of the retort assembly rather than the bottom with the exclusion of a lid and a flow path to the base plate. In certain embodiments, the fore volume may be placed to the side of the sintering volume (i.e., the area where parts are placed and sintered), assuming an upright orientation of the retort, while remaining in uninterrupted fluid communication with the sintering volume, within the retort. In certain embodiments, a plate including a fore volume may be positioned at arbitrary positions within the retort assembly, rather than an uppermost or lowermost position relative to adjacent retort components.

In certain embodiments, a fore volume housing, with an interior cavity defining a fore volume, may house a cleansing object. The interior cavity may be fluidly connected to a process gas inlet via a first gaseous connection apparatus (such as a tube or conduit), and may be connected to a retort inlet via a second gaseous connection apparatus (such as a tube or conduit). In some embodiments, the length of the second gaseous connection apparatus may be shorter than the length of the first gaseous connection apparatus, the shorter length may be desired to reduce the possible ingress of contaminants into the gaseous connection apparatus between the fore volume and retort, said ingress of contaminants due to any permeability through the material of which the connection apparatus is comprised. In certain embodiments, the retort, second gaseous connection apparatus, and fore volume housing may be disposed entirely within and interior to the heating elements within the furnace. In certain embodiments, the first gaseous connection apparatus may mate, interface, or otherwise connect with a process gas inlet outside of the interior region of the furnace defined by the heating elements.

"Centrally located retort"

In certain embodiments, the retort may be constructed in the form of a cylinder, tube, or other extruded shape. In certain embodiments, parts may be located within a cavity interior to the retort. In certain embodiments, a fore volume may be adjacent, coupled to, or integral with the retort. In certain embodiments, a cleansing object may be placed within the fore volume. In certain embodiments, the generators of the extruded shape (the flat end-surfaces of a tube, for example) may serve as connection points for gaseous inflow and outflow (via a Peclet tube) to and from the retort. In certain embodiments, the coupling of the inlet gas may proceed through the fore volume prior to entering the retort cavity. In certain embodiments, gaseous connection points may reside entirely within the interior region of the furnace defined by the heating elements. In certain embodiments, a fore volume may be placed between the gaseous inlet tube and the retort cavity.

The purpose of the retort is to control the chemical and thermal environment such that parts undergoing sintering (or other thermal processing) experience the desired chemical and thermal environment. The control of the chemical and thermal environment is accomplished by reasons which may include (1) chemical isolation (via sealing) of the objects to be processed within the retort from regions outside of the retort, (2) control of gaseous species brought to the objects to be thermally processed, (3) control of the direction of flow for various sources and types of gaseous species into and out of the retort, (4) transferring heat from the heating elements or other objects accomplishing heating to the objects to be thermally processed. The selection of retort materials, in some embodiments, also includes concerns related to the rate of degradation or accumulated damage that a retort may encounter during its useable life (which may, in some embodiments, exceed 100, 150, or 300 thermal processing cycles). Further, in some embodiments, the material of construction may be a determining factor in the degree to which the retort may chemically and physically isolate the materials to be thermally processed from regions in the furnace with a lesser degree of atmosphere control (that is, regions of the furnace which may be considered dirty). Materials of composition may include: ceramics (alumina, mullite), quartz/glass (typically with a lower service temperature, pyrex, borosilicate glass, fused quartz, fused silica), carbides (like silicon carbide), nitrides (aluminum nitride, silicon nitride), graphite (many different grades with varying density, porosity, and permeability), stainless steel (typically with a lower surface temperature, alloys like 310s), refractory metals (molybdenum), and combinations of various materials (including those listed above).

The nature of leaks will vary depending upon the regime of gas flow at the various regions where the leaks will occur. In general, there are three regimes of flow: (1) molecular, (2) laminar (or continuum), and (3) transition. These flow regimes are described in the reference "Vacuum Technology" by Alexander Roth.

In molecular flow, the motion of gas molecules with a vanishingly small number of collisions between molecules. In the molecular flow regime, the molecules interact with fixed bodies such as the retort, furnace walls, insulation, the objects to be sintered, and any other stationary objects. The objects may include pores, holes, orifices, or tubes in any of the fixed objects, such as pores in the retort that may exist, according to some embodiments, or the interface at mating/joining surfaces which may permit a slit, channel, or other open space connecting volumes on either side of the mating/joining surfaces, according to some embodiments. Since the molecules tend not to interact with one another, and interact only with stationary objects (such as the walls of the objects just described), the molecules are free to transport from one end of a channel (e.g., pores, holes, orifices, or tubes in the fixed object) to the other end of the channel without molecule-molecule collisions. Thus, while in a state where molecular flow is dominant, the net flux of molecules is dependent upon the difference in concentration of a molecular species on either side of the channel, a factor depending upon the geometry of channel (including, for example, a characteristic diameter and length), and other physicochemical properties of the system including the diffusive properties of the molecules undergoing transport and the system temperature.

In laminar flow, the motion of gas molecules is dominated by collisions between and among the gas molecules. The molecules will tend to move from regions of high collision frequency to regions of low collision frequency, tending to push molecules from high to low pressure. In the case of the channel discussed in the molecular flow case, a channel in which laminar flow is the dominant transport mechanism will be dominated by collisions between molecules, and these collisions will bias the diffusion of gas molecules from the high pressure toward the low pressure side.

In transition flow, neither molecular nor laminar flow is the dominant transport mechanism for molecules, and both must be considered in the analysis of transport phenomena.

The regime of flow is determined by ratio of a system lengthscale, L, which is representative of the geometry in which the flow is proceeding (for example the diameter of a tube, the height of a slit, the height of a step in an external flow, etc...) and comparing this lengthscale L to the mean free path, z, of the molecules undergoing transport. When the mean free path is very small as compared to the system lengthscale, $z/L < 100$, the flow is considered laminar (or continuum), and when the mean free path is large as compared to the system lengthscale ($z/L > 100$), the flow is considered molecular. In the intermediate range between these two limits, the flow is generally considered to be in transition flow.

It is desirable to minimize leakage through joints vs. walls. For the example case of a retort, which may consist of several walls with a sum total area $A_w$ and thickness $t_w$, and have joints (e.g., along a mating interface) with a total perimeter $P_J$, height $H_J$, and thickness $t_J$, there is a rate at which material is transported through the retort (proportional to the area of the retort, $A_w$, and inversely proportional to the thickness $t_w$ raised to some power), and a rate at which material is transported through the joints (proportional to the product of the perimeter and height $P_J*H_J$ and inversely proportional to the thickness $t_J$ raised to some power). In certain embodiments, the retort wall and joints will each exhibit a permeability, which is the coupling constant between the flux of gaseous molecules and the difference in species pressure on either side of either the retort wall or joints. In certain embodiments, the permeability may be dominated by molecular, transition, or laminar flow. In certain embodiments, the permeability through the retort wall may be modeled, captured, or otherwise considered as an array of tubes of a given length (likely not less than the thickness of the retort wall $t_w$), diameter, and concentration per area. While such a computation could, in principle, yield a permeability for the retort wall, the permeability is likely more easily measured with appropriate instrumentation, as will be appreciated by one skilled in the art. However, an approximate model for the permeability, as will be appreciated by one skilled in the art, will yield an initial estimation for the geometry of the pores, holes, orifices, cavities, or other permeable regions of the retort (which, in some embodiments, may encompass all, none, or a portion of retort area) which may be used to estimate the regime of flow and dominant flow physics. Likewise, in certain embodiments, the joints of the retort may be modeled using standard relations for slits, joints, tubes, or other standard shapes in molecular, transition, or laminar flow (as may be found in "Vacuum Technology" by Roth or "Scientific Foundations of Vacuum Technique" by Dushman). In certain embodiments, the joints may consist of more regular, estimable, and/or calculable geometries (as may be found in "Vacuum Technology" by Roth or "Scientific Foundations of Vacuum Technique" by Dushman), or may be measured with an appropriate test apparatus, as appreciated by one skilled in the art. Further, the total flux of gaseous species anticipated at a given operating point of the furnace may be considered for the retort wall and retort joints, and, in certain embodiments, the comparison between the two values may inform the selection of retort material and the joint design (including the tolerances and surface finish of the shaping and machining operations required to construct the joints).

In summation, improved retorts according to the present disclosure may contain several features which improve the quality of objects to be thermally processed, including:

- A retort material having a lower permeability (fewer contaminants may tunnel through the wall) relative to existing retorts;
- Parting interfaces designed to reduce the transport of contaminants through the parting interfaces, such that the parting interfaces transport fewer contaminants than the retort walls;

- A fore volume which may optionally be used (with a getter) to clean the incoming process gas to which the objects to be thermally process are exposed; and
- There is a Peclet seal on the retort outlet to isolate the interior cavity of the retort from backflow of contaminants.

The concepts encompassed by the present disclosure may act in concert, or, in some cases, individually depending upon the requirements of the retort, furnace architecture, materials comprising the objects to be sintered, and other process variables (for example, the temperatures, gas flow rates of the process gas, and process gas composition defined in the thermal processing cycle).

Now disclosed are definitions useful for the present disclosure:

Parting interface - A region formed where two opposing surfaces are brought to contact or near contact.

Hermetic seal - A degree of sealing wherein a leak source has a rate at least two orders of magnitude less a rate of the sum total of all leaks.

Semi-sealing - A degree of sealing wherein a leak source has a rate within an order of magnitude of the rate of the sum total of all leaks.

Permeable - A degree of sealing wherein a leak source is the largest fraction of the sum total of all leaks.

Process gas - Gas deliberately supplied to the objects during thermal processing, typically at a defined rate of flow. Examples include: air (typically during debinding and/or at low temperatures before and after the completion of a thermal cycle), nitrogen, hydrogen, argon, methane, and mixtures thereof such as, for example, 4% hydrogen-96% argon (forming gas).

Effluent gas - Gas of any constitution, flow, or pressure which exits the retort or furnace from an exit port toward a pump, vent, or other discharge apparatus.

Object support - A structure which mates with a part to act as a support during the fabrication of the object. The object support may provide support during a deposition (printing) stage, a crosslinking or curing stage, a debinding stage, a sintering stage, an annealing stage, or some or all of the various stages. The same object support may be used across more than one stage, or different object supports may be used at each stage. In some embodiments, the object support may be comprised, at least in part, of material identical to the part. In some embodiments, the object support may be comprised, at least in part, or in select regions, of material which is dissimilar than the part.

Cleansing object - A substance which sequesters, cleans, scrubs, sorbs, or otherwise captures specific gaseous species when heated to and/or within particular temperature ranges; such action is often referred to as 'gettering'. These materials are often referred to as getters or getter materials. Getter materials may be provided in several different physical forms depending upon the application pelletized, puck, pill, granule, powder, film, wire, sheet, or other forms are commonly available from various manufacturers of getter materials, or may be custom ordered. As one skilled in the art may appreciate, to maximize the ability of the getter material to interact with flowing gas, the getter material may be selected to exhibit a large surface area to volume ratio or, in some embodiments, a large surface area to mass ratio. The specific materials to be cleaned by the getters are often determined by the temperature (which affects the rate of gettering) and the composition of the getter material: in some embodiments, an aluminum getter may capture oxygen; in some embodiments, a barium getter may capture carbon dioxide, hydrogen, nitrogen, and oxygen; in some embodiments, a magnesium getter may capture oxygen; in some embodiments, a rare earth element such as cerium or lanthanum may capture carbon dioxide, hydrogen, nitrogen, and oxygen; in some embodiments, a titanium getter may capture hydrogen, nitrogen, and oxygen; in some embodiments, a zirconium getter may capture oxygen, hydrogen, carbon monoxide, carbon dioxide, water, and various hydrocarbons. In some embodiments, the getter may capture the gas species directly, or the gas species may react on, near, or within the surface of the getter material to related or constituent molecules which may then be captured by the getter. In some embodiments, the getter may be an alloy of various materials. Commercially available getter alloys include St 171, St 172, St 707, and St 101 from SAES Getters/U.S.A., Inc. of Colorado Springs, Colorado. In some embodiments, other materials such as alloys of titanium with, for example, vanadium, aluminum, iron, zirconium, or alloys of zirconium with, for example, hafnium, or iron, or alloys of iron with, for example, vanadium, chrome, silicon, or manganese; or silicon; or alloys containing iron, silicon, and zirconium; or alloys containing iron, silicon, and vanadium. In some embodiments, the material may be formed into a simple object such as a puck, disc, block, or pill. In some embodiments, a single simple object may be used. For objects which are small (typically on the order of 1-10, or 10-20 millimeters), several simple objects may be utilized in combination, in some embodiments. In some embodiments, the getter material may be fabricated into a shape with characteristics including or similar to: (1) a labyrinthine pattern, (2) an open-cell structure, (3) a tubular structure, or other similar tortuous and high surface area shape. In some embodiments, the choice of getter is determined by both (1) the specific gaseous materials to be gettered from a gas stream and (2) the temperature at which a sufficient amount of gettering occurs to satisfy the chemical constrains of the process (thermal processing of sinterable objects, in this case). A mass of getter material comprising the cleansing object may be selected based upon attributes which may at least include (a) the cleanliness of the process gas utilized, (b) the hermiticity of the process gas inlet lines everywhere between the process gas source and the cleansing object(s), (c) the sensitivity of the materials from which the objects to be thermally processed are comprised, (d) the permeability, area, and thickness of the retort material, (e) the accessible surface area per mass of the getter material, (f) the pressure of the gas surrounding the cleansing object(s), (g) the temperatures to which the cleansing object(s) are exposed, (h) the temperatures at which the cleansing object(s) are to clean the gas, or (i) the composition of the cleansing object(s).

Fore volume - An enclosed cavity with port for gas entry and gas exit, configured such the gas flows into the entrance and out of the exit, and placed such that the exit of the fore volume is fluidly connected to the entrance of the retort. The fore volume is capable of housing a cleansing object.

Interior cavity - A volume formed within the retort to house parts during thermal processing.

Retort - A housing to provide specific chemical and thermal conditions for objects to be thermally processed.

**Claims**

1. A retort for thermally processing sinterable objects, comprising:

   a retort body having an interior cavity configured to receive at least one part for sintering;
   the retort body including a retort inlet and a retort outlet;
   wherein the retort inlet is configured to be fluidly connected to a process gas inlet tube and receive a flow of process gas;
   wherein the retort inlet is fluidly connected to the interior cavity;
   wherein the interior cavity is fluidly connected to the retort outlet; and

   wherein the retort outlet is configured to be fluidly connected to an effluent gas outlet tube via a Peclet sealing element.

2. The retort of claim 1 wherein the retort body is formed from a base plate, a lid and a plurality of retort elements stacked therebetween.

3. The retort of claim 2 wherein an outer layer of the retort body has a thickness selected such that a first permeation rate of contaminants through the outer layer is at least one order of magnitude less than a second permeation rate of contaminants between two of the plurality of stacked shelves.

4. The retort of claim 1 wherein the Peclet sealing element extends into an outlet plenum from a wall of the retort outlet.

5. The retort of claim 4 wherein the Peclet sealing element extends from the wall of the retort outlet towards the effluent gas outlet tube.

6. The retort of claim 1 further comprising a fore volume shaped to facilitate the flow of the process gas from the process gas inlet tube over a cleansing object in a flow path to the interior cavity.

7. The retort of claim 1 wherein the retort inlet includes a sealing element configured to engage an interior surface of the process gas inlet tube.

8. A retort for thermally processing sinterable objects, comprising:

   a base plate having a retort inlet and a retort outlet, the retort outlet incorporating a peclet sealing element, the base plate further having a fore volume;
   a plurality of shelf units successively stacked upon one another while a bottom-most one of the plurality of shelf units engages the base plate, wherein each shelf unit includes an inlet plenum region, an outlet plenum region and an interior cavity configured to receive an object to be sintered;
   wherein when successively stacked upon one another the inlet plenum regions of the shelf units form an inlet plenum and the outlet plenum regions of the shelf units form an outlet plenum;
   a top plate configured to engage with an upper-most one of the plurality shelf units;
   wherein when the base plate, the plurality of shelves and the top plate are assembled together to form a retort assembly, the retort assembly includes a process gas flow path through the retort inlet to the fore volume, from the fore volume to the inlet plenum, from the inlet plenum to the interior cavities of the plurality of shelf units, from the plurality of interior cavities to the plenum outlet and from the plenum outlet to the retort outlet through the Peclet sealing element.

9. The retort of claim 8 wherein an outer layer of the retort assembly has a thickness selected such that a first permeation rate of contaminants through the outer layer is at least one order of magnitude less than a second permeation rate of contaminants between two of the plurality of shelf units.

10. The retort of claim 8 wherein the Peclet sealing element extends into the outlet plenum from a wall of the retort outlet.

11. The retort of claim 10 wherein the Peclet sealing element extends from the wall of the retort outlet towards an effluent gas outlet tube.

12. The retort of claim 8 wherein the fore volume is shaped to facilitate the flow of the process gas from the process gas inlet tube over the cleansing object in a flow path to the inlet plenum.

13. The retort of claim 8 wherein the retort inlet includes a sealing element configured to engage an interior surface of the process gas inlet tube.

14. A method of thermally processing sinterable objects, comprising:

disposing an object in a retort having a retort inlet, an internal cavity and a retort outlet incorporating a Peclet sealing element;
disposing the retort and in a furnace and conducting a thermal process within the retort; and
providing a flow of process gas through the retort inlet, the internal cavity where the process gas interacts with object and exits through the Peclet sealing element of the retort outlet.

Gasflow ----

Temperature ——

Time

**FIG. 1**

FIG. 2

**FIG. 3**

FIG. 4

FIG. 5

FIG. 6

**FIG. 7**

**FIG. 8**

**FIG. 9**

EP 4 137 770 A1

**FIG. 10A**

**FIG. 10B**

FIG. 11

**FIG. 12**

EP 4 137 770 A1

**FIG. 13**

EP 4 137 770 A1

FIG. 14

**FIG. 15**

FIG. 16

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/167802 A1 (DESKTOP METAL INC [US]) 20 August 2020 (2020-08-20) <br> * figures 1-43 * <br> * paragraph [0002] * <br> * paragraph [0007] - paragraph [0024] * <br> * paragraph [0071] - paragraph [0199] * <br> ----- | 1-14 | INV. <br> F27B5/04 <br> F27B5/16 <br> F27D7/06 <br> F27D99/00 <br> B22F3/00 |
| A | US 2013/309623 A1 (CHOU CHENG-YU [TW] ET AL) 21 November 2013 (2013-11-21) <br> * figures 1-5 * <br> * paragraph [0001] - paragraph [0002] * <br> * paragraph [0008] - paragraph [0010] * <br> * paragraph [0016] - paragraph [0024] * <br> ----- | 8-13 | |

TECHNICAL FIELDS
SEARCHED (IPC)

F27B
F27D

The present search report has been drawn up for all claims

| Place of search | Date of completion of the search | Examiner |
|---|---|---|
| The Hague | 16 January 2023 | Jung, Régis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 137 770 A1**

## ANNEX TO THE EUROPEAN SEARCH REPORT
## ON EUROPEAN PATENT APPLICATION NO.

EP 22 18 8574

16-01-2023

| Patent document cited in search report | | Publication date | Patent family member(s) | | Publication date |
|---|---|---|---|---|---|
| WO 2020167802 | A1 | 20-08-2020 | EP | 3921160 A1 | 15-12-2021 |
| | | | JP | 2022531053 A | 06-07-2022 |
| | | | KR | 20220004620 A | 11-01-2022 |
| | | | US | 2022008991 A1 | 13-01-2022 |
| | | | WO | 2020167802 A1 | 20-08-2020 |
| US 2013309623 | A1 | 21-11-2013 | NONE | | |

EPO FORM P0459